# EUROPÄISCHE PATENTSCHRIFT

(11) **EP 3 582 386 B1**
(45) Veröffentlichungstag und Bekanntmachung des Hinweises auf die Patenterteilung: **06.10.2021**
(21) Anmeldenummer: 19174622.1
(22) Anmeldetag: 15.05.2019
(51) Int. Cl.: G01D 5/20, B60L 13/10, B60L 13/08, G01B 7/004

(54) **BEWEGUNGSVORRICHTUNG MIT ENTKOPPELTEN POSITIONSREGLERN UND VERFAHREN ZUR REGELUNG DER VORRICHTUNG**
MOVEMENT DEVICE WITH DECOUPLED POSITION REGULATORS AND METHOD OF CONTROLING THE DEVICE
DISPOSITIF DE MOUVEMENT POURVU DE RÉGULATEURS DE POSITION DÉCOUPLÉS ET PROCÉDÉ POUR COMMANDER LE DISPOSITIF

(30) Priorität: 13.06.2018 DE 102018209402
(43) Veröffentlichungstag der Anmeldung: 18.12.2019
(73) Patentinhaber: Robert Bosch GmbH, 70442 Stuttgart (DE)
(72) Erfinder: Frangen, Joachim, 74081 Heilbronn (DE)

(56) Entgegenhaltungen:
- DE-A1-102016 215 212
- DE-A1-102016 224 951
- US-A1- 2014 265 690

## Beschreibung

Die Erfindung betrifft ein Verfahren zum Betrieb einer Bewegungsvorrichtung gemäß Anspruch 1 und eine gemäß diesem Verfahren eingerichtete Bewegungsvorrichtung gemäß Anspruch 10. Mit derartigen Bewegungsvorrichtungen ist es möglich, eine zweite Baugruppe gegenüber einer ersten Baugruppe allein durch Magnetkräfte in der Schwebe zu halten und kontrolliert zu bewegen, wobei die Rollen von erster und zweiter Baugruppe auch vertauscht sein können.

Aus der WO 2015/017 933 A1 ist eine Bewegungsvorrichtung bekannt, bei welcher die Magnetkräfte mittels Elektromagneten erzeugt werden. Dies verursacht hohe Energieverluste.

Aus der US 2014/265690 A1 ist eine Bewegungsvorrichtung bekannt, bei der die Kräfte zur Bewegung des aktiven Antriebsteils durch Wirbelströme erzeugt werden.

Aus der DE 10 2016 215212 A1 ist ein Planarmotor bekannt, bei dem die Bewegungskräfte durch bestromte Spulen erzeugt werden.

In der DE 10 2016 224 951 A1 hat die Anmelderin eine vollkommen neuartige Bewegungsvorrichtung beschrieben, mit der es möglich ist, die von der WO 2015/017 933 A1 bekannte Funktion allein durch Verwendung von Permanentmagneten zu erzielen. Dadurch entsteht weit weniger Abwärme, wobei gleichzeitig weitaus größere Lasten in der Schwebe gehalten werden können. Erfindungsgemäß werden ein Verfahren zum Betrieb einer Bewegungsvorrichtung gemäß Anspruch 1 und eine gemäß diesem Verfahren eingerichtete Bewegungsvorrichtung gemäß Anspruch 10 vorgeschlagen.

Ein Vorteil der vorliegenden Erfindung besteht darin, dass entgegen dem Earnshaw-Theorem eine stabile Relativlage zwischen erster und zweiter Baugruppe einstellbar ist, obwohl ausschließlich Permanentmagnete Verwendung finden. Das erfindungsgemäße Verfahren ermöglicht es dabei auch, beliebige Bewegungsbahnen auszuführen, wobei sich während der entsprechenden Translationsbewegung gleichzeitig die relative Drehlage zwischen erster und zweiter Baugruppe ändern kann. Das Verfahren arbeitet dabei so stabil, dass trotz unvermeidbarer Messfehler bei der Lagebestimmung und Fehlern bei der rechnerischen Modellierung der Magnetfelder eine stabile Relativlage zwischen erster und zweiter Baugruppe eingeregelt werden kann. Darüber hinaus benötigt das Verfahren so wenig Rechenleistung, dass es mit heute zu vertretbaren Preisen erhältlichen Digitalrechnern ausführbar ist.

Gemäß dem selbständigen Anspruch 1 werden zur Positionsregelung der verschiedenen Bewegungsfreiheitsgrade also jeweils gesonderte Positionsregler verwendet, die entkoppelt bzw. unabhängig voneinander arbeiten. Die nichtlineare Verkopplung der verschiedenen Freiheitsgrade wird im Rahmen der genannten Berechnung berücksichtigt.

Während des Betriebs der Bewegungsvorrichtung sind die erste und die zweite Baugruppe vorzugsweise mit so geringem Abstand zueinander angeordnet, dass zwischen der zweiten Permanentmagnetanordnung und zumindest einem Teil der ersten Permanentmagnetanordnungen Magnetkräfte einstellbar sind, die stark genug sind, um die beiden Baugruppen gegen die Wirkung der Schwerkraft auf Abstand bzw. in der Schwebe zu halten. Die zweite Baugruppe ist vorzugsweise durch Verstellung der ersten Permanentmagnetanordnungen relativ zur ersten Baugruppe bewegbar.

Die Bewegungsvorrichtung kann eine einzige erste Baugruppe und wenigstens eine zweite Baugruppe umfassen, wobei die erste Baugruppe, insbesondere die erste Basis, im Sinne eines Stators ortsfest angeordnet ist, während die wenigstens eine zweite Baugruppe jeweils für sich genommen beweglich gegenüber der ersten Baugruppe ist, so dass sie beispielsweise als Werkstückträger bzw. als Transportkörper nutzbar ist. Die Bewegungsvorrichtung kann wenigstens eine erste Baugruppe und eine einzige zweite Baugruppe umfassen, wobei die zweite Baugruppe, insbesondere die zweite Basis, im Sinne eines Stators ortsfest angeordnet ist, während die wenigstens eine erste Baugruppe jeweils für sich genommen beweglich relativ zur zweiten Baugruppe ist, so dass sie beispielsweise als Werkstückträger bzw. als Transportkörper nutzbar ist. Die vom Stator verschiedene Baugruppe bzw. der Werkstückträger ist vorzugsweise mit Abstand zum Stator bzw. frei schwebend bewegbar.

Unter der Regelgröße soll wie üblich diejenige Größe verstanden werden, bezüglich derer im Rahmen der Regelung ein Vergleich zwischen Soll- und Ist-Wert vorgenommen wird.

Die genannten Relativpositionen können die Ortskoordinaten der vom Stator verschiedenen Baugruppe bezüglich eines rechtwinkligen Koordinatensystems, welches ortsfest bezüglich dem Stator ist, umfassen. Die genannten Relativpositionen können die dem Koordinatensystem zugeordneten Relativdrehwinkel, insbesondere die Euler-Winkel (https://de.wikipedia.org/wiki/Eulersche_Winkel) der vom Stator verschiedenen Baugruppe umfassen. Dabei kann ausgenutzt werden, dass um die X- und die Y-Achse, welche parallel zur Bewegungsoberfläche des Stators angeordnet sind, vorzugsweise nur vergleichsweise kleine Drehbewegungen ausgeführt werden, während nur um die Z-Achse, welche senkrecht zur Bewegungsoberfläche ausgerichtet ist, eine vollständige Drehung um 360° möglich ist.

Die als Stator verwendete Baugruppe ist vorzugsweise aus mehreren gesonderten Modulen zusammengesetzt, die untereinander im Wesentlichen identisch ausgebildet sind, wobei sie jeweils einen Teil der betreffenden Basis bilden. Unterschiede zwischen den Modulen können sich beispielsweise hinsichtlich der Zuordnung einer eindeutigen Kennung ergeben.

Eine Permanentmagnetanordnung umfasst vorzugsweise wenigstens zwei magnetische Dipole, die jeweils paarweise mit festem Abstand und mit fester Drehlage relativ zueinander angeordnet sind. Dabei versteht es sich, dass ein idealer magnetischer Dipol technisch nur annäherungsweise realisierbar ist. Bei einer bevorzugten Ausführungsform der Erfindung reicht es aus, wenn die unter der Internetadresse https://de.wikipedia.org/w/index.php?title=Magnetisches_Dipolmoment abrufbaren Formeln für die Kräfte und Drehmomente zwischen zwei magnetischen Dipolen oder äquivalente vereinfachte Näherungsformeln bzw. -wertetabellen verwendbar sind, insbesondere im Rechenmodell der Bewegungsvorrichtung. Vorzugsweise werden die Permanentmagnetanordnungen jeweils aus mehreren gesonderten Einzelmagneten zusammengesetzt, die jeweils einen einzigen magnetischen Dipol bilden. Hierdurch lässt sich auf einfache Weise eine besonders gute Annäherung an die genannten Formeln erreichen. Die genannten Kräfte und Drehmomente sind vorzugsweise auf den Schwerpunkt der vom Stator verschiedenen Baugruppe bezogen.

Die Aktuatoren haben vorzugsweise jeweils einen einzigen Freiheitsgrad, höchst vorzugsweise einen endlosen Drehfreiheitsgrad. Die Aktuatoren sind vorzugsweise als Elektromotoren ausgeführt, höchst vorzugsweise als bürstenlose Gleichstrommotoren. Die ersten Permanentmagnetanordnungen sind vorzugsweise fest mit einer Antriebswelle eines zugeordneten Elektromotors verbunden. Die Antriebswellen bzw. deren Drehachsen sind vorzugsweise senkrecht zu einer Bewegungsoberfläche der ersten Basis ausgerichtet, welche der zweiten Baugruppe zugewandt ist. Die Bewegungsoberfläche ist vorzugsweise geschlossen und/oder eben ausgeführt. Die Bewegungsoberfläche kann senkrecht zur Richtung der Schwerkraft ausgerichtet sein, wobei die Ausrichtung frei wählbar ist. Die Bewegungsoberfläche kann weitgehend beliebig gekrümmt im Raum verlaufen.

Es ist denkbar, dass die Stellgrößen bzw. die entsprechende Kräfte bzw. Drehmomente dem Benutzer der Bewegungsvorrichtung angezeigt werden. Mittels der Stellgrößen kann ermittelt werden, mit welcher Last die vom Stator verschieden Baugruppe beladen ist. Mittels der Stellgrößen kann auch ermittelt werden, wo auf der betreffenden Baugruppe die Last angeordnet ist. Weiter kann mittels der Stellgrößen ermittelt werden, ob die bewegte Baugruppe mit einem anderen Gegenstand kollidiert ist.

Weiter ist des denkbar, dass dem Benutzer die Relativposition zwischen erste und zweiter Baugruppe.

In den abhängigen Ansprüchen sind vorteilhafte Weiterbildungen und Verbesserungen der Erfindung angegeben.

Es kann vorgesehen sein, dass die Positionsregler jeweils als stetige, lineare Regler ausgeführt sind. Entsprechende Regler sind von der Webseite, die unter der Internetadresse https://de.wikipedia.org/wiki/Regler abrufbar ist, bekannt. Die Positionsregler werden vorzugsweise digital berechnet. Die Berechnung findet vorzugsweise zeitdiskret, insbesondere mit einem konstanten Zeittakt, statt. Vorzugsweise sind die Positionsregler als PID-Regler ausgeführt. Andere Regler, wie beispielsweise Fuzzy-Regler, sind auch verwendbar. Die Regelparameter der vorgeschlagenen linearen, stetigen Regler sind jedoch einfacher einzustellen, was insbesondere dann von Bedeutung ist, wenn die Regelparameter während des Betriebs der Bewegungsvorrichtung verstellt werden sollen, um eine optimale Anpassung an den jeweiligen Betriebszustand zu erreichen.

Es können sechs Positionsregler vorgesehen sein. Damit ist eine Positionsregelung in allen sechs möglichen Freiheitsgraden eines starren Körpers im Raum möglich. Ein besonderer Vorteil des erfindungsgemäßen Verfahrens besteht gerade darin, dass derart viele Regelungen parallel ausgeführt werden können, ohne dass Probleme hinsichtlich der Stabilität der Regelung zu befürchten sind.

Es kann vorgesehen sein, dass die Aktuatoren mittels elektrisches Stroms verstellbar sind, wobei jedem Aktuator ein Stellungsregler zugeordnet ist, dessen Regelgröße die Stellung des betreffenden Aktuators ist, wobei dessen Stellgröße zumindest mittelbar der betreffende elektrische Strom ist. Es ist denkbar, eine dem Stellungsregler unterlagerte Drehmomentregelung einzusetzen. Vorzugsweise ist jedem Aktuator eine Stellungsbestimmungsvorrichtung zugeordnet, mit der eine Aktuator-Ist-Stellung dieses Aktuators ermittelbar ist. Vorzugsweise wird die Aktuator-Ist-Stellung unmittelbar gemessen, wobei es ebenfalls denkbar ist, die Aktuator-Ist-Stellung aus den Spannungen und Strömen im Aktuator zu berechnen.

Es kann vorgesehen sein, die Aktuator-Ist-Stellung mit der Aktuator-Soll-Stellung zu vergleichen und bei nicht plausibler Abweichung einen Fehler-Merker in dem Digitalrechner zu setzen, so dass eine Diagnosefunktion eine Ersatzmaßnahme treffen und eine Zustandsmeldung ausgeben kann.

Es kann eine Positionsbestimmungsvorrichtung vorgesehen sein, mittels derer ein Ist-Relativpositionsvektor der zweiten Baugruppe relativ zur ersten Baugruppe bestimmbar, insbesondere messbar, ist. Der Ist-Relativpositionsvektor umfasst vorzugsweise sechs Einzelwerte entsprechend den sechs Freiheitsgraden eines starren Körpers im Raum. Die Positionsbestimmungsvorrichtung ist beispielsweise gemäß der US 6 615 155 B2 ausgeführt.

Es kann vorgesehen sein, dass die Aktuator-Soll-Stellungen durch Lösung eines nichtlinearen Gleichungssystems aus den Stellgrößen berechnet werden. Die Bewegungsvorrichtung ist vorzugsweise so ausgelegt, dass in jeder Relativstellung zwischen erster und zweiter Baugruppe wenigstens sechs vorzugsweise wenigstens neun erste Permanentmagnetanordnungen vorhanden sind, die in unmittelbarer Nachbarschaft zur zweiten Permanentmagnetanordnung angeordnet sind, so dass starke Magnetkräfte zwischen den genannten Permanentmagnetanordnungen wirken. In der Folge ist die Lösbarkeit des nichtlinearen Gleichungssystems sichergestellt. Der Vorteil dieser Berechnung liegt darin, dass der Parameter Zeit gerade nicht berücksichtigt wird. Es ist daher nicht zu befürchten, dass diese Berechnung tiefgreifenden Einfluss auf die dynamische Stabilität der gesamten Regelung hat. Die dynamische Stabilität wird in erster Linie durch die Einstellung der Positionsregler bestimmt.

Es kann vorgesehen sein, dass im Rahmen der Lösung des nichtlinearen Gleichungssystems ein skalarer Fehlerparameter aus den Ist-Relativpositionen und vorgegebenen Soll-Relativpositionen oder dem Stellgrößenvektor und dem Soll-Stellgrößenvektor berechnet wird, wobei der Fehlerparameter im Rahmen der Lösung des nichtlinearen Gleichungssystems optimiert wird. Der Fehlerparameter wird vorzugsweise so berechnet, dass er in jedem Fall positiv ist. Beispielsweise kann die Summe der Quadrate der Differenzen zwischen den sechs einzelnen Soll- und der jeweils zugordneten Ist-Relativposition berechnet werden. Im Rahmen der Optimierung wird vorzugsweise der Betrag des Fehlerparameters minimiert. Die Optimierung geschieht mittels des Gradientenverfahrens, das von der Webseite bekannt ist, die unter der Internetadresse https://de.wikipedia.org/wiki/Gradientenverfahren abrufbar ist.. Es ist auch denkbar, die Lösung des nichtlinearen Gleichungssystems zumindest teilweise vorab durchzuführen und das Ergebnis in Wertetabellen zu speichern, die während des Betriebs der Bewegungsvorrichtung verwendet werden. Derartige Wertetabellen sind jedoch so umfangreich, dass die Lösung des nichtlinearen Gleichungssystems im laufenden Betrieb der Bewegungsvorrichtung bevorzugt ist.

Es kann vorgesehen sein, dass die Optimierung des Fehlerparameters iterativ ausgeführt wird, wobei die Positionsregler zeitdiskret mit einem festen Zeittakt berechnet werden, wobei innerhalb eines Zeittakts alle Iterationsschritte der Optimierung ausgeführt werden. Hierdurch wird eine hohe Genauigkeit und eine hohe Dynamik der Regelung erreicht.

Es kann vorgesehen sein, dass als Startwert der iterativen Optimierung die Aktuator-Soll-Stellungen aus dem unmittelbar vorhergehenden Zeittakt verwendet werden. Die Optimierung benötigt damit nur wenige Iterationsschleifen, die ohne Weiteres in dem genannten Zeittakt ausführbar sind.

Es können entweder mehrere erste oder mehrere zweite Baugruppen vorgesehen sein, wobei das erfindungsgemäße Verfahren für jede Baugruppe, die mehrfach vorhanden ist, gesondert ausgeführt wird. Sofern die erste Baugruppe mehrfach vorhanden ist, ist dies ohne Weiteres möglich. Wenn die zweite Baugruppe mehrfach vorhanden ist, wird vorzugsweise ausgenutzt, dass nur die ersten Permanentmagnetanordnungen, die in unmittelbarer Nähe einer zweiten Baugruppe angeordnet sind, eine nennenswerte Magnetkraft bewirken. Die verschiedenen zweiten Baugruppen werden damit jeweils von unterschiedlichen ersten Permanentmagnetanordnungen beeinflusst, so dass die verschiedenen erfindungsgemäßen Verfahren unabhängig voneinander ausgeführt werden können. Die Baugruppe, die mehrfach vorhanden ist, ist vorzugsweise in der Art eines Werkstückträgers bzw. in der Art eines Transportkörpers ausgebildet.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
Fig. 1 eine grobschematische Schnittansicht einer erfindungsgemäßen Bewegungsvorrichtung;
Fig. 2 eine grobschematische Draufsicht der zweiten Baugruppe;
Fig. 3 ein Diagramm des erfindungsgemäßen Verfahrens;
Fig. 4 ein Diagramm der Positionsregeleinheit in Fig. 3;
Fig. 5 ein Diagramm der Berechnungseinheit in Fig. 3; und
Fig. 6 ein Diagramm einer Stelleinheit in Fig. 3.

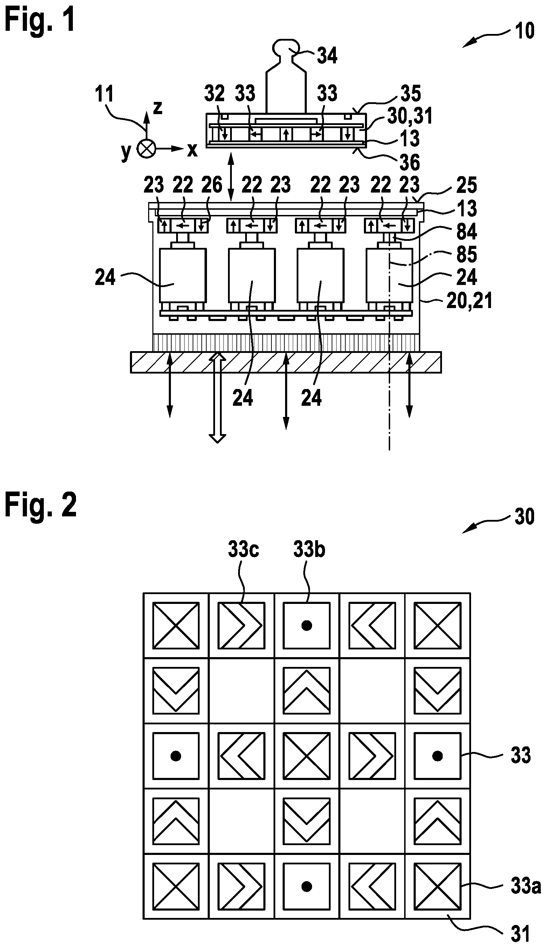

Fig. 1 zeigt eine grobschematische Schnittansicht einer erfindungsgemäßen Bewegungsvorrichtung 10. Die Bewegungsvorrichtung 10 umfasst vorliegend eine einzige erste und eine einzige zweite Baugruppe 20; 30, wobei die erste Baugruppe in der Art eines ortsfesten Stators ausgeführt ist, wobei die zweite Baugruppe in der Art eines beweglichen Werkstückträgers ausgeführt. Der Stator ist typischerweise bezüglich seiner Bewegungsoberfläche 25 wesentlich größer als der Werkstückträger ausgeführt. Die Zuordnung von erster und zweiter Baugruppe zu Stator und Werkstückträger kann auch umgekehrt gewählt werden. Die vom Stator verschiedene Baugruppe kann mehrfach vorhanden sein.

Die erste Baugruppe 20 umfasst eine Basis 21, die vorliegend in der Art eines allseits geschlossenen Gehäuses ausgebildet ist. Vorliegend bildet die Oberseite der Basis 21 eine geschlossene, ebene Bewegungsoberfläche 25 entlang derer die zweite Baugruppe 30 frei schwebend bewegbar ist. Vorliegend ist die Bewegungsoberfläche 25 senkrecht zur Richtung der Schwerkraft ausgerichtet, wobei die Ausrichtung frei wählbar ist. Insbesondere kann die Anordnung nach Fig. 1 um 180° gedreht über Kopf betrieben werden. Die Bewegungsoberfläche 25 kann weitgehend beliebig gekrümmt im Raum verlaufen.

Innerhalb der ersten Basis 21 sind mehrere erste Permanentmagnetanordnungen 22 angeordnet, die jeweils über einen zugeordneten Aktuator 24 mit der ersten Basis 21 verbunden sind. Die ersten Permanentmagnetanordnungen 22 sind untereinander identisch ausgeführt und umfassen jeweils drei erste Einzelmagneten, die parallel zur Bewegungsoberfläche 25 in einer Reihe nebeneinander angeordnet sind. Die ersten Einzelmagnete 23 haben jeweils ein Magnetfeld, welches demjenigen eines magnetischen Dipols zumindest in einiger Entfernung nahe kommt. Die entsprechenden Dipolvektoren 26 sind in der Art eines Halbach-Arrays angeordnet, so dass sich zur zweiten Baugruppe hin ein besonders starkes Magnetfeld ergibt. Der Abstand einer ersten Permanentmagnetanordnung 22 zur Bewegungsoberfläche 25 ist bei allen ersten Permanentmagnetanordnungen 22 jeweils gleich gewählt.

Die Aktuatoren 24 sind vorliegend als Elektromotoren, insbesondere als bürstenlose Gleichstrommotoren, ausgebildet. Sie haben dementsprechend einen einzigen endlosen Drehfreiheitsgrad, wobei die entsprechende Drehachse 85 senkrecht zur Bewegungsoberfläche 25 ausgerichtet ist. Die Antriebswelle 84 des Elektromotors ist fest mit den ersten Einzelmagneten 23 verbunden, so dass diese eine im Wesentlichen starre Einheit bilden, die als Ganzes bezüglich der betreffenden Drehachse 85 drehbar ist. Die Drehachse ist in der Mitte der zugeordneten ersten Permanentmagnetanordnung 22 angeordnet.

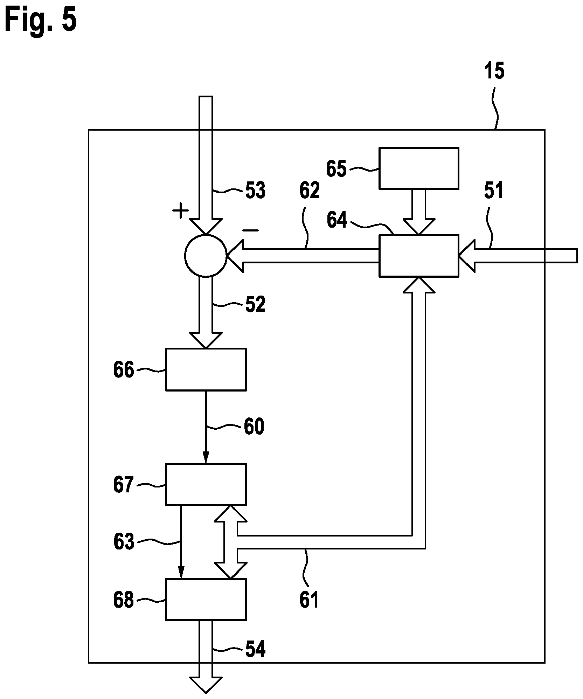

Die erste Baugruppe 20 umfasst vorzugsweise eine Vielzahl von ersten Permanentmagnetanordnungen 22 mit zugeordneten Aktuatoren 24, die in einem flächigen Raster verteilt über die Bewegungsoberfläche 25 angeordnet sind. Die Teilungsabstände dieses Rasters sind vorzugsweise gleichförmig ausgeführt, so dass zur geometrischen Beschreibung dieser Anordnung nur wenige Modellparameter (Nr. 65 in Fig. 5) erforderlich sind.

Der ersten Baugruppe 20 ist ein rechtwinkliges Koordinatensystem 11 zugeordnet, dessen X- und Y-Achse parallel zur Bewegungsoberfläche 25 ausgerichtet ist, wobei dessen Z-Achse senkrecht zur Bewegungsoberfläche 25 ausgerichtet ist.

Die zweite Baugruppe 30 ist in der Art eines Werkstückträgers ausgeführt. Sie umfasst eine zweite Basis, die vorliegend in Form einer ebenen Platte mit konstanter Dicke ausgeführt ist, wobei sie eine ebene Ober- und eine ebene Unterseite 35; 36 hat. Die Oberseite 35 dient zur Aufnahme einer Nutzlast 34, wobei sie weitgehend beliebig gestaltet werden kann. Die der ersten Baugruppe 20 zugewandte Unterseite 36 ist vorzugsweise an die Bewegungsoberfläche 25 angepasst, wobei es insbesondere möglich sein soll, die Unterseite 36 zur unmittelbaren Anlage mit der Bewegungsoberfläche 25 zu bringen, so dass die zweite Baugruppe 30 stabil auf der ersten Baugruppe 20 aufliegt, insbesondere im stromlosen Zustand der Bewegungsvorrichtung 10.

Vorliegend hat die zweite Basis 31 in der Draufsicht einen quadratischen Umriss, wobei auch rechteckige, kreisrunde oder beliebige andere Umrisse denkbar sind. Die zweite Baugruppe 30 umfasst eine zweite Permanentmagnetanordnung 32, welche fest relativ zur zweiten Basis angeordnet ist. Die zweite Permanentmagnetanordnung 32 umfasst mehrere zweite Einzelmagnete 33, deren Magnetfeld demjenigen eines magnetischen Dipols zumindest in einiger Entfernung nahe kommt. Eine mögliche Anordnung der zweiten Einzelmagnete 33 wird mit Bezug auf Fig. 2 näher erläutert. Die zweiten Einzelmagnete 33 sind möglichst nahe benachbart zur Unterseite 36 angeordnet, so dass zu den ersten Permanentmagnetanordnungen 22 hin starke Magnetkräfte einstellbar sind.

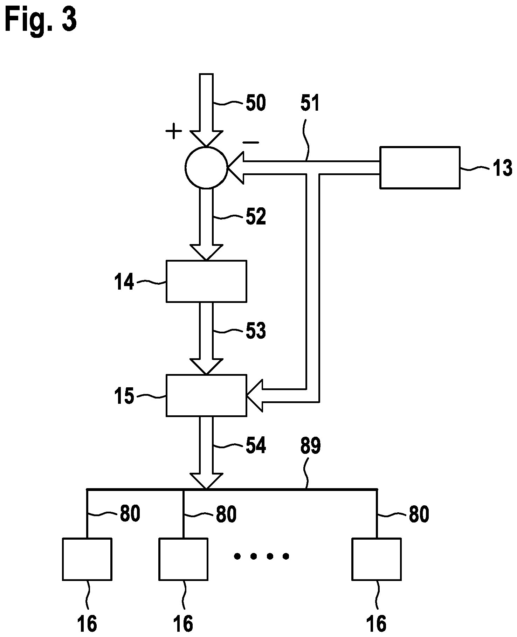

Weiter umfasst die Bewegungsvorrichtung 10 eine Positionsbestimmungsvorrichtung 13, die entsprechend der US 6 615 155 B2 ausgeführt ist, wobei sie teilweise in der ersten und teilweise in der zweiten Baugruppe 20; 30 angeordnet ist. Diese Positionsbestimmungsvorrichtung 13 arbeitet induktiv. Sie umfasst planare Spulen in der ersten Baugruppe 20, die verteilt über die gesamte Bewegungsoberfläche 25 angeordnet sind. Weiter sind Spulen in der zweiten Baugruppe 30 vorgesehen. Mit dieser Positionsbestimmungsvorrichtung 13 lassen sich beispielsweise die drei Ortskoordinaten X, Y, Z der zweiten Baugruppe 30 bezüglich dem Koordinatensystem 11 ermitteln, wobei sich außerdem beispielsweise drei Euler-Winkel (https://de.wikipedia.org/wiki/Eulersche_Winkel) bezüglich des Koordinatensystems 11 ermitteln lassen. Die genannten sechs Größen werden im Rahmen der Fig. 3 bis 6 zum Ist-Relativpositionsvektor (Nr. 51 in Fig. 3) zusammengefasst.

Fig. 2 zeigt eine grobschematische Draufsicht der zweiten Baugruppe 30. Die Zeichenebene ist parallel zur Unterseite (Nr. 36 in Fig. 1) der zweiten Baugruppe ausgerichtet, wobei die Blickrichtung zur ersten Baugruppe hin gerichtet ist. Die zweiten Einzelmagnete 33 sind verteilt über die gesamte Unterseite der zweiten Basis 31 verteilt angeordnet. Ihre Dipolvektoren haben jeweils eine von sechs verschieden möglichen Anordnungen, die paarweise senkrecht oder parallel ausgerichtet sind. Die Dipolvektoren der zweiten Einzelmagnete 33, die mit dem Symbol gemäß Nr. 33a versehen sind, sind senkrecht von der Unterseite weg gerichtet. Die Dipolvektoren der zweiten Einzelmagnete 33, die mit dem Symbol gemäß Nr. 33b versehen sind, sind senkrecht zur Unterseite hin gerichtet. Die Dipolvektoren der zweiten Einzelmagnete 33, die mit dem Symbol gemäß Nr. 33c versehen sind, sind parallel zur Unterseite in Pfeilrichtung gerichtet. Die Anordnung und Orientierung der zweiten Einzelmagnete 23 ist entsprechend einem Halbach-Array vorzugsweise so gewählt, dass sich zur ersten Baugruppe hin ein besonders starkes Magnetfeld ergibt.

Im Übrigen ist die genaue Anordnung der zweiten Einzelmagnete 33 eher zweitrangig. Vorrangig ist, dass die Anordnung und die Ausrichtung der zweiten Einzelmagnete 33 relativ zur zweiten Basis 31 bekannt ist, wobei sie vorzugsweise als Modellparameter (Nr. 65 in Fig. 5) im Rahmen des erfindungsgemäßen Verfahrens verwendet wird.

Es versteht sich, dass anstelle von zweiten Einzelmagneten 33 auch eine einstückige Permanentmagnetanordnung verwendbar ist, die in analoger Weise magnetisiert ist. Diese kann beispielsweise im 3D-Druckverfahren hergestellt werden, wobei der entsprechende Kunststoff ein Bindemittel für permanentmagnetische Partikel bildet. Im Rahmen einer Serienproduktion lässt sich mit Einzelmagneten aber sehr viel leichter ein mit geringen Toleranzen reproduzierbares Magnetfeld herstellen, welches außerdem sehr stark ist. Weiter lässt sich mit Einzelmagneten sehr viel einfacher ein Magnetfeld erzeugen, das sich im Rahmen des Rechenmodells (Nr. 64 in Fig. 5) durch die Formeln für einen idealen magnetischen Dipol mit guter Näherung beschreiben lässt.

Fig. 3 zeigt ein Diagramm des erfindungsgemäßen Verfahrens. Der Benutzer der Bewegungsvorrichtung gibt einen Soll-Relativpositionsvektor 50 vor, welcher die gewünschte Lage der zweiten Baugruppe relativ zur ersten Baugruppe beschreibt. Dem Soll-Relativpositionsvektor 50 liegt dabei das gleiche Koordinatensystem zugrunde wie dem Ist-Relativpositionsvektor 51, der wie oben beschrieben von der Positionsbestimmungsvorrichtung 13 gemessen wird. Der Soll-Relativpositionsvektor 50 kann sich im Verlauf der Zeit, vorzugsweise stetig, ändern, so dass sich die zweite Baugruppe entlang einer Bahn bewegt.

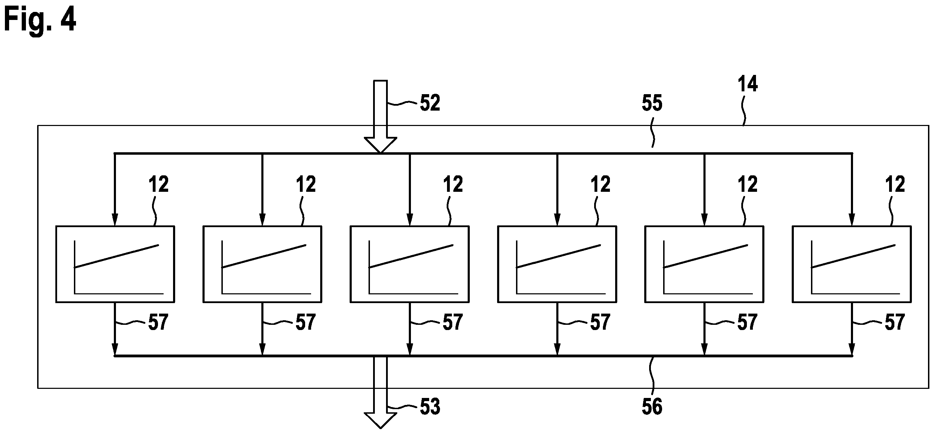

In einem ersten Schritt wird ein Regeldifferenzvektor 52 ermittelt, indem der Ist-Relativpositionsvektor 51 komponentenweise vom Soll-Relativpositionsvektor 50 subtrahiert wird oder umgekehrt. Der Regeldifferenzvektor 52 wird der Positionsregeleinheit 14 zugeführt, welche mit Bezug auf Fig. 4 näher beschrieben wird. Die Positionsregeleinheit 14 ermittelt aus dem Regeldifferenzvektor 52 einen Stellgrößenvektor 53. Der Stellgrößenvektor 53 repräsentiert die magnetischen Kräfte und die magnetischen Drehmomente, die von der ersten Baugruppe auf die zweite Baugruppe ausgeübt werden müssen, damit sich der Ist-Relativpositionsvektor 51 an den Soll-Relativpositionsvektor 50 annähert.

Mit der Berechnungseinheit 15 wird aus dem Stellgrößenvektor 53 ein Aktuator-Soll-Stellungsvektor 54 berechnet, welcher die Stellungen der verschiedenen Aktuatoren enthält, die einzustellen sind, damit sich die Kräfte- und Drehmomente gemäß dem Stellgrößenvektor 53 ergeben. Die Berechnungseinheit 15 wird mit Bezug auf Fig. 5 näher beschrieben. Zwecks Vereinfachung der Berechnung beschreibt der Aktuator-Soll-Stellungsvektor 54 vorzugsweise nur die Aktuatoren, welche sich in der Nähe der zweiten Baugruppe befinden. Es versteht sich, dass dies abhängig vom Ist-Relativpositionsvektor 51 unterschiedliche Aktuatoren sein können.

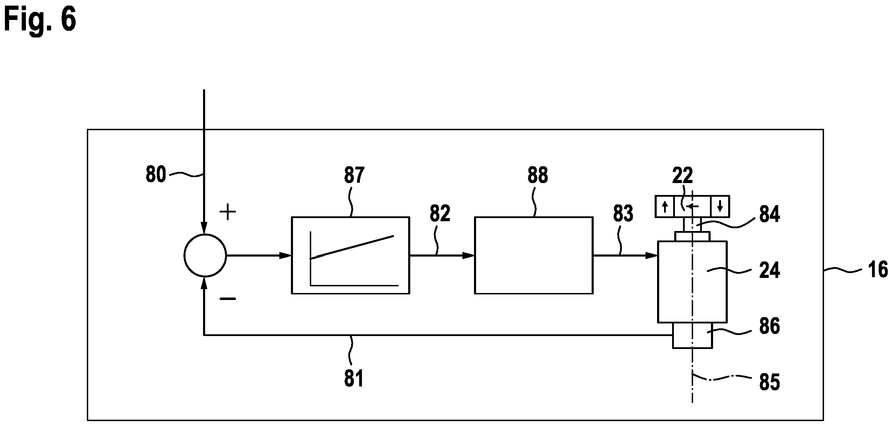

Im Rahmen der Figuren 3 bis 6 werden Vektoren, die mehrere skalare Einzelgrößen umfassen, durch einen Doppelpfeil dargestellt, wobei skalare Einzelgrößen durch einen einfachen Pfeil dargestellt werden. Mit dem schwarzen Balken Nr. 89 soll die Auftrennung eines Vektors, hier dem Aktuator-Soll-Stellungsvektor 54, in seine Einzelkomponenten, hier die einzelnen Aktuator-Soll-Stellungen 80, symbolisiert werden. Die Aktuator-Soll-Stellungen 80 werden jeweils einer zugeordneten Stelleinheit 16 zugeführt, die jeweils einen zugeordneten Aktuator umfasst. Die Stelleinheiten 16 werden mit Bezug auf Fig. 6 näher beschrieben.

Die Anordnung gemäß der Fig. 3 bildet zusammen mit der Anordnung gemäß Fig. 1 einen geschlossenen Positionsregelkreis für die Relativposition zwischen der ersten und der zweiten Baugruppe. Die Regeleinheit 14 ist dabei denkbar einfach ausgeführt, wobei insbesondere einfache PID-Regler zum Einsatz kommen, die für nichtlineare Regelstrecken, wie die vorliegende, nicht ohne Weiteres geeignet sind. Die extreme Nichtlinearität der Regelstrecke wird allein in der Berechnungseinheit 15 berücksichtigt.

Fig. 4 zeigt ein Diagramm der Positionsregeleinheit 14 in Fig. 3. Der waagerechte schwarze Balken 55 symbolisiert die Auftrennung des Regeldifferenzvektors 52 in seine einzelnen, skalaren Regeldifferenzen. Diese werden jeweils einem zugeordneten Positionsregler 12 zugeführt, der vorliegend als stetiger linearer Regler, insbesondere als PID-Regler ausgeführt ist. Im Rahmen der Positionsregeleinheit 14 findet dementsprechend keine Wechselwirkung zwischen den sechs Freiheitsgraden des Regeldifferenzvektors 52 statt. Diese findet allein in der Berechnungseinheit 15 statt.

Jeder Positionsregler 12 ermittelt eine jeweils zugeordnete skalare Stellgröße 57. Diese repräsentiert eine Kraft oder ein Drehmoment, das dem betreffenden Freiheitsgrad zugeordnet ist. Der schwarze waagerechte Balken Nr. 56 symbolisiert, dass die einzelnen Stellgrößen 57 zum Stellgrößenvektor 53 zusammengefasst werden.

Die bevorzugten PID-Regler 12 haben jeweils drei Regelparameter. Diese können fest eingestellt sein. Vorzugsweise werden die Regelparameter jedoch im Betrieb verstellt, beispielsweise, um die Bewegungsvorrichtung an eine sich mit der Zeit verändernde Nutzlast (Nr. 34 in Fig. 1) oder eine sich infolge einer veränderten Betriebslage verändernde Wirkrichtung der Schwerkraft anzupassen. Wenn die Bewegungsoberfläche (Nr. 25 in Fig. 1) gekrümmt im Raum verläuft, ist es vorteilhaft, die Regelparameter abhängig von der Relativposition zwischen erster und zweiter Baugruppe zu verstellen. Abhängig davon, ob sich die zweite Baugruppe bzw. der Werkstückträger eher gemächlich oder eher dynamisch entlang einer vorgegebenen Bahn bewegen soll, kann es ebenfalls vorteilhaft sein, die genannten Regelparameter während des Betriebs zu verändern.

Fig. 5 zeigt ein Diagramm der Berechnungseinheit 15 in Fig. 3. Der Kern der Berechnungseinheit 15 ist ein Rechenmodell 64 der Bewegungsvorrichtung, mit dem abhängig vom Ist-Relativpositionsvektor 51 und abhängig von einem temporären Aktuator-Soll-Stellungsvektor 61 berechenbar ist, welche magnetischen Kräfte und Drehmomente zwischen der ersten und der zweiten Baugruppe wirken. Die Bewegungsvorrichtung kann so aufgebaut sein, dass sie nur Einzelmagnete umfasst, die jeweils ein Magnetfeld haben, welches demjenigen eines magnetischen Dipols mit guter Näherung entspricht. Damit können die Kräfte und die Drehmomente zwischen zwei Einzelmagneten mit den Formeln für einen idealen magnetischen Dipol berechnet werden, die unter der Internetadresse https://de.wikipedia.org/w/index.php?title=Magnetisches_Dipolmoment abrufbar sind. Die auf den Massenschwerpunkt der zweiten Baugruppe wirkende Gesamtkraft bzw. das Gesamtdrehmoment, die zu einem berechneten Stellgrößenvektor 62 zusammengefasst sind, ergibt sich aus der Aufsummierung über alle möglichen Paare von einem ersten und einem zweiten Einzelmagnet unter Berücksichtigung aller wirkenden magnetischen Kräfte und Momente, Hebelkräfte und Trägheitskräfte. Neben den genannten Eingangsgrößen 51; 61 werden für diese Berechnung Modellparameter 65 benötigt, die sich während des Betriebs der Bewegungsvorrichtung nicht ändern, insbesondere die Anordnung und die Ausrichtung der zweiten Einzelmagnete relativ zur zweiten Basis, die Anordnung der Aktuatoren relativ zur ersten Basis sowie das Gewicht und der Schwerpunkt der zweiten Baugruppe. Außerdem geht die Stärke bzw. das magnetische Dipolmoment der ersten und der zweiten Einzelmagnete in die Berechnung ein.

Darüber hinaus können Modellparameter einbezogen werden, die sich während des Betriebs der Bewegungsvorrichtung ändern, insbesondere das Gewicht und der Schwerpunkt der zweiten Baugruppe, die Richtung der Schwerkraft oder Trägheitskräfte, die bei einer Beschleunigung des Gesamtsystems wirken. Es kann vorgesehen sein, diese Informationen in dem Modell aus dessen Eingangsgrößen zu berechnen und der Positionsregeleinheit 14 zur Anpassung der Regelparameter oder dem Anwender über eine Datenschnittstelle zur Verfügung zu stellen, beispielsweise um den Beladungszustand zu überwachen oder eine Prozesskontrolle durchzuführen.

Es versteht sich, dass neben den genannten Formeln auch auf Wertetabellen zurückgegriffen werden kann, die beispielsweise durch Ausmessung der Magnetfelder der ersten Permanentmagnetanordnungen und der zweiten Permanentmagnetanordnung gewonnen wurden. Dabei kann zwischen den einzelnen Werten der Wertetabelle interpoliert werden.

Im Übrigen beschreibt die Fig. 5 die Lösung des dem Rechenmodell 64 zugrunde liegenden nichtlinearen Gleichungssystems, bei dem der temporäre Aktuator-Soll-Stellungsvektor 61 so gewählt wird, dass der berechnete Stellgrößenvektor 62 gleich dem Stellgrößenvektor 53 der Positionsregeleinheit ist. Dabei kommt vorliegend das Gradientenverfahren zur Anwendung, wobei Fig. 5 eine entsprechende Iterationsschleife zeigt.

Als Startwert für den temporären Aktuator-Soll-Stellungsvektor 61 wird der Aktuator-Soll-Stellungsvektor 54 verwendet, der im letzten Zeittakt der Positionsregelung berechnet wurde. Mittels des Rechenmodels 64 wird daraus der berechnete Stellgrößenvektor 62 ermittelt. Aus der komponentenweisen Differenz zwischen Stellgrößenvektor 53 und berechnetem Stellgrößenvektor 62 wird mittels einer Fehlerfunktion 66 ein skalarer Fehlerparameter 60 berechnet. Im Rahmen der Fehlerfunktion 66 können beispielsweise die Quadrate der genannten Differenzen aufsummiert werden.

Wenn der Fehlerparameter 60 einen vorgegebenen, etwas von Null verschiedenen Grenzwert unterschreitet oder eine vorgegebene Anzahl von Iterationen erreicht, wird die Iterationsschleife abgebrochen und der temporäre Aktuator-Soll-Stellungsvektor 61, der im Zwischenspeicher 68 gespeichert wurde, wird als Aktuator-Soll-Stellungsvektor 54 ausgegeben. Dieser Zusammenhang soll mit dem Pfeil Nr. 63 symbolisiert werden.

Ist die vorstehende Bedingung nicht erfüllt, so wird aus dem zwischengespeicherten temporären Aktuator-Soll-Stellungsvektor 61 und dem Fehlerparameter 60 entsprechend den Rechenvorschriften des Gradientenverfahrens, die unter der Internetadresse https://de.wikipedia.org/wiki/Gradientenverfahren abrufbar sind, ein neuer temporärer Aktuator-Soll-Stellungsvektor 61 berechnet. Hierbei wird insbesondere der Gradient des Rechenmodells 64 verwendet, der wahlweise numerisch oder formelmäßig berechnet werden kann.

Fig. 6 zeigt ein Diagramm einer Stelleinheit 16 in Fig. 3. Alle bisher mit Bezug auf die Figuren 3 bis 6 beschriebenen Elemente, mit Ausnahme der Positionsbestimmungsvorrichtung, werden vorzugsweise unter Verwendung eines Digitalrechners digital berechnet, wobei die Berechnungen vorzugsweise zeitdiskret in einem festen Zeittakt durchgeführt werden. Der Digitalrechner kann mehrere gesonderte Recheneinheiten umfassen, die miteinander in Datenaustauschverbindung stehen.

In dem Diagramm nach Fig. 6 sind überwiegend Komponenten enthalten, die physisch realisiert sind. Namentlich handelt es sich dabei um den Aktuator 24 mit der ersten Permanentmagnetanordnung 22, der mit Bezug auf Fig. 1 bereits erläutert wurde.

Dieser ist mit einer Stellungsbestimmungsvorrichtung 86 in Form eines Drehgebers ausgestattet, welcher dem Digitalrechner eine Aktuator-Ist-Stellung 81 übermittelt. Weiter ist dem Aktuator 24 ein Stromregler 88 zugordnet, der auch als Antriebsverstärker bezeichnet wird. Dieser führt dem Aktuator 24 den elektrischen Strom 83 zu, welcher notwendig ist, um das vom Digitalrechner vorgegebene Aktuator-Soll-Drehmoment 82 einzustellen.

Der Stellungsregler 87 wird vorzugsweise vom Digitalrechner digital berechnet. Vorzugsweise handelt es sich um einen stetigen, linearen Regler, insbesondere um einen PID-Regler. Dem Stellungsregler 87 wird die Differenz aus der betreffenden Aktuator-Soll-Stellung 80 und der betreffenden Aktuator-Ist-Stellung 81 zugeführt. Hieraus wird das bereits angesprochene Aktuator-Soll-Drehmoment 82 ermittelt. Im Ergebnis liegt ein geschlossener Regelkreis vor, der bewirkt, dass sich die Aktuator-Ist-Stellung 81 an die Aktuator-Soll-Stellung 80 annähert.

### Bezugszeichen

10 Bewegungsvorrichtung
11 Koordinatensystem
12 Positionsregler
13 Positionsbestimmungsvorrichtung
14 Positionsregeleinheit
15 Berechnungseinheit
16 Stelleinheit
20 erste Baugruppe
21 erste Basis
22 erste Permanentmagnetanordnung
23 erster Einzelmagnet
24 Aktuator
25 Bewegungsoberfläche
26 Dipolvektor
30 zweite Baugruppe
31 zweite Basis
32 zweite Permanentmagnetanordnung
33 zweiter Einzelmagnet
33a zweiter Einzelmagnet mit Dipolvektor senkrecht von der Unterseite her
33b zweiter Einzelmagnet mit Dipolvektor senkrecht zur Unterseite hin
33b zweiter Einzelmagnet mit Dipolvektor parallel zur Unterseite in Pfeilrichtung
34 Nutzlast
35 Oberseite
36 Unterseite
50 Soll-Relativpositionsvektor
51 Ist-Relativpositionsvektor 52 Regeldifferenzvektor
53 Stellgrößenvektor
54 Aktuator-Soll-Stellungsvektor
55 Auftrennung des Regeldifferenzvektors in die einzelnen Regeldifferenzen
56 Zusammenfassung der einzelnen Stellgrößen zum Stellgrößenvektor 57 skalare Stellgröße
60 skalarer Fehlerparameter
61 temporärer Aktuator-Soll-Stellungsvektor
62 berechneter Stellgrößenvektor
63 Trigger der ausgelöst wird, wenn der Fehlerparameter klein genug ist oder eine vorgegebene Anzahl von Iterationsschritten ausgeführt wurde
64 Rechenmodell der Bewegungsvorrichtung
65 Modellparameter
66 Fehlerfunktion
67 Optimierungsverfahren
68 Zwischenspeicher
80 Aktuator-Soll-Stellung
81 Aktuator-Ist-Stellung
82 Aktuator-Soll-Drehmoment
83 elektrischer Strom
84 Antriebswelle
85 Drehachse der Antriebswelle
86 Stellungsbestimmungsvorrichtung
87 Stellungsregler
88 Stromregler
89 Auftrennung des Aktuator-Soll-Stellungsvektors in die einzelnen Aktuator-Soll-Stellungen

## Patentansprüche

1. Verfahren zum Betrieb einer Bewegungsvorrichtung (10) umfassend eine erste und eine zweite Baugruppe (20; 30), wobei die erste Baugruppe (20) eine erste Basis (21) und mehrere erste Permanentmagnetanordnungen (22) umfasst, wobei die ersten Permanentmagnetanordnungen (22) über einen jeweils zugeordneten Aktuator (24) mit der ersten Basis (21) derart verbunden sind, dass sie jeweils als Ganzes in wenigstens einem Freiheitsgrad mittels des jeweils zugeordneten Aktuators (24) bewegbar relativ zur ersten Basis (21) sind, wobei die zweite Baugruppe (30) eine zweite Basis (31) und eine zweite Permanentmagnetanordnung (32) umfasst, wobei die zweite Permanentmagnetanordnung (32) fest relativ zur zweiten Basis (31) angeordnet ist, wobei die zweite Permanentmagnetanordnung (32) mehrere Einzelmagnete (33) oder eine einstückige Permanentmagnetanordnung, die in analoger Weise magnetisiert ist, umfasst, wobei die Anordnung und die Ausrichtung der Einzelmagnete relativ zur zweiten Basis (31) bekannt ist, wobei wenigstens zwei Positionsregler (12) mit jeweils einer einzigen skalaren Regelgröße und einer einzigen skalaren Stellgröße (57) vorgesehen sind, wobei die Regelgröße jeweils eine der sechs möglichen Freiheitsgrade hinsichtlich einer Relativposition (50; 51) zwischen der ersten und der zweiten Baugruppe (20; 30) ist, wobei die Stellgröße (57) eine Kraft bzw. ein Drehmoment repräsentiert, welches diesem Freiheitsgrad zugeordnet ist, wobei Aktuator-Soll-Stellungen (80) der Aktuatoren (24) durch Lösung eines nichtlinearen Gleichungssystems mittels des Gradientenverfahrens aus den Stellgrößen (57) berechnet und/oder mittels Wertetabellen ermittelt werden, wobei die Aktuatoren (24) entsprechend eingestellt werden.

2. Verfahren nach Anspruch 1,
wobei die Positionsregler (12) jeweils als stetige, lineare Regler ausgeführt sind.

3. Verfahren nach einem der vorstehenden Ansprüche,
wobei sechs Positionsregler (12) vorgesehen sind.

4. Verfahren nach einem der vorstehenden Ansprüche,
wobei die Aktuatoren (24) mittels elektrischen Stroms verstellbar sind, wobei jedem Aktuator (24) ein Stellungsregler (87) zugeordnet ist, dessen Regelgröße die Stellung (80; 81) des betreffenden Aktuators (24) ist, wobei dessen Stellgröße zumindest mittelbar der betreffende elektrische Strom (83) ist.

5. Verfahren nach einem der vorstehenden Ansprüche,
wobei eine Positionsbestimmungsvorrichtung (13) vorgesehen ist, mittels derer ein Ist-Relativpositionsvektor (51) der zweiten Baugruppe (30) relativ zur ersten Baugruppe (20) bestimmbar, insbesondere messbar, ist.

6. Verfahren nach einem der vorstehenden Ansprüche,
wobei im Rahmen der Lösung des nichtlinearen Gleichungssystems ein skalarer Fehlerparameter (60) aus den Ist-Relativpositionen (51) und vorgegebenen Soll-Relativpositionen (50) oder dem Stellgrößenvektor und dem Soll-Stellgrößenvektor berechnet wird, wobei der Fehlerparameter (60) im Rahmen der Lösung des nichtlinearen Gleichungssystems optimiert wird.

7. Verfahren nach Anspruch 6,
wobei die Optimierung des Fehlerparameters (60) iterativ ausgeführt wird, wobei die Positionsregler (12) zeitdiskret mit einem festen Zeittakt berechnet werden, wobei innerhalb eines Zeittakts alle Iterationsschritte der Optimierung ausgeführt werden.

8. Verfahren nach Anspruch 7,
wobei als Startwert der iterativen Optimierung die Aktuator-Soll-Stellungen (54) aus dem unmittelbar vorhergehenden Zeittakt verwendet werden.

9. Verfahren nach einem der vorstehenden Ansprüche,
wobei entweder mehrere erste oder mehrere zweite Baugruppen (20; 30) vorgesehen sind, wobei das Verfahren nach einem der vorstehenden Ansprüche für jede Baugruppe (20; 30), die mehrfach vorhanden ist, gesondert ausgeführt wird.

10. Bewegungsvorrichtung (10) umfassend eine erste und eine zweite Baugruppe (20; 30), wobei die erste Baugruppe (20) eine erste Basis (21) und mehrere erste Permanentmagnetanordnungen (22) umfasst, wobei die ersten Permanentmagnetanordnungen (22) über einen jeweils zugeordneten Aktuator (24) mit der ersten Basis (21) derart verbunden sind, dass sie jeweils als Ganzes in wenigstens einem Freiheitsgrad mittels des jeweils zugeordneten Aktuators (24) bewegbar relativ zur ersten Basis (21) sind, wobei die zweite Baugruppe (30) eine zweite Basis (31) und eine zweite Permanentmagnetanordnung (32) umfasst, wobei die zweite Permanentmagnetanordnung (32) fest relativ zur zweiten Basis (31) angeordnet ist, wobei die zweite Permanentmagnetanordnung (32) mehrere Einzelmagnete (33) oder eine einstückige Permanentmagnetanordnung, die in analoger Weise magnetisiert ist, umfasst, wobei die Anordnung und die Ausrichtung der Einzelmagnete relativ zur zweiten Basis (31) bekannt ist, wobei wenigstens zwei Positionsregler (12) mit jeweils einer einzigen skalaren Regelgröße und einer einzigen skalaren Stellgröße (57) vorgesehen sind, wobei die Regelgröße jeweils eine der sechs möglichen Freiheitsgrade hinsichtlich einer Relativposition (50; 51) zwischen der ersten und der zweiter Baugruppe (20; 30) ist, wobei die Stellgröße (57) eine Kraft bzw. ein Drehmoment repräsentiert, welches diesem Freiheitsgrad zugeordnet ist, wobei Aktuator-Soll-Stellungen (80) der Aktuatoren (24) durch Lösung eines nichtlinearen Gleichungssystems mittels des Gradientenverfahrens aus den Stellgrößen (57) berechenbar sind und/oder mittels Wertetabellen ermittelbar sind, wobei die Aktuatoren (24) entsprechend einstellbar sind.

11. Bewegungsvorrichtung nach Anspruch 10,
wobei die Bewegungsvorrichtung zur Ausführung eines Verfahrens nach einem der Ansprüche 2 bis 9 eingerichtet ist.

## Claims

1. Method for operating a movement device (10) comprising a first and a second assembly (20; 30), wherein the first assembly (20) comprises a first base (21) and a plurality of first permanent-magnet arrangements (22), wherein the first permanent-magnet arrangements (22) are connected to the first base (21) via a respectively assigned actuator (24) in such a way that they can each be moved as a whole relative to the first base (21) in at least one degree of freedom by means of the respectively assigned actuator (24), wherein the second assembly (30) comprises a second base (31) and a second permanent-magnet arrangement (32), wherein the second permanent-magnet arrangement (32) is arranged fixedly relative to the second base (31), wherein the second permanent-magnet arrangement (32) comprises a plurality of individual magnets (33) or a one-piece permanent-magnet arrangement which is magnetized in an analogous way, wherein the arrangement and the alignment of the individual magnets relative to the second base (31) is known, wherein at least two position controllers (12), each with a single scalar controlled variable and with a single scalar manipulated variable (57), are provided, wherein the controlled variable is, in each instance, one of the six possible degrees of freedom as regards a relative position (50; 51) between the first and the second assembly (20; 30), wherein the manipulated variable (57) represents a force or a torque that is assigned to this degree of freedom, wherein desired actuator positions (80) of the actuators (24) are computed from the manipulated variables (57) by solving a non-linear system of equations by means of the gradient method and/or ascertained by means of tables of values, wherein the actuators (24) are set correspondingly.

2. Method according to Claim 1,
wherein the position controllers (12) are each implemented as continuous linear controllers.

3. Method according to one of the preceding claims, wherein six position controllers (12) are provided.

4. Method according to one of the preceding claims, wherein the actuators (24) are adjustable by means of electric current, wherein each actuator (24) is assigned a position controller (87), of which the controlled variable is the position (80; 81) of the relevant actuator (24), wherein the manipulated variable of the position controller is, at least indirectly, the relevant electric current (83).

5. Method according to one of the preceding claims, wherein a position-determination device (13) is provided, by means of which an actual relative-position vector (51) of the second assembly (30) relative to the first assembly (20) can be determined, in particular measured.

6. Method according to one of the preceding claims, wherein, within the context of solving the non-linear system of equations, a scalar error parameter (60) is computed from the actual relative positions (51) and predetermined desired relative positions (50) or from the manipulated-variable vector and the desired manipulated-variable vector, wherein the error parameter (60) is optimized within the context of solving the non-linear system of equations.

7. Method according to Claim 6,
wherein the error parameter (60) is optimized iteratively, wherein the position controllers (12) are computed in a time-discrete manner with a fixed time cycle, wherein all the iterative steps of the optimization are executed within one time cycle.

8. Method according to Claim 7,
wherein the desired actuator positions (54) from the immediately preceding time cycle are used as the starting value of the iterative optimization.

9. Method according to one of the preceding claims, wherein either a plurality of first or a plurality of second assemblies (20; 30) are provided, wherein the method according to one of the preceding claims is executed separately for each assembly (20; 30) that is present in a plurality.

10. Movement apparatus (10) comprising a first and a second assembly (20; 30), wherein the first assembly (20) comprises a first base (21) and a plurality of first permanent-magnet arrangements (22), wherein the first permanent-magnet arrangements (22) are connected to the first base (21) via a respectively assigned actuator (24) in such a manner that they can each be moved as a whole relative to the first base (21) in at least one degree of freedom by means of the respectively assigned actuator (24), wherein the second assembly (30) comprises a second base (31) and a second permanent-magnet arrangement (32), wherein the second permanent-magnet arrangement (32) is arranged fixedly relative to the second base (31), wherein the second permanent-magnet arrangement (32) comprises a plurality of individual magnets (33) or a one-piece permanent-magnet arrangement which is magnetized in an analogous way, wherein the arrangement and the alignment of the individual magnets relative to the second base (31) is known, wherein at least two position controllers (12), each with a single scalar controlled variable and with a single scalar manipulated variable (57), are provided, wherein the controlled variable is, in each instance, one of the six possible degrees of freedom as regards a relative position (50; 51) between the first and the second assembly (20; 30), wherein the manipulated variable (57) represents a force or a torque that is assigned to this degree of freedom, wherein desired actuator positions (80) of the actuators (24) can be computed from the manipulated variables (57) by solving a non-linear system of equations by means of the gradient method and/or ascertained by means of tables of values, wherein the actuators (24) can be set correspondingly.

11. Movement device according to Claim 10,
wherein the movement device is set up to carry out a method according to one of Claims 2 to 9.

## Revendications

1. Procédé de fonctionnement d'un dispositif de déplacement (10) comprenant un premier et un deuxième module (20 ; 30), le premier module (20) comprenant une première base (21) et une pluralité de premiers agencements d'aimants permanents (22), les premiers agencements d'aimants permanents (22) étant reliés à la première base (21) par le biais d'un actionneur respectivement associé (24) de telle manière qu'ils puissent chacun être déplacés par rapport à la première base (21) comme un tout dans au moins un degré de liberté au moyen de l'actionneur respectivement associé (24), le deuxième module (30) comprenant une deuxième base (31) et un deuxième agencement d'aimants permanents (32), le deuxième agencement d'aimants permanents (32) étant disposé de manière fixe par rapport à la deuxième base (31), le deuxième agencement d'aimants permanents (32) comprenant une pluralité d'aimants individuels (33) ou un agencement d'aimants permanents monobloc qui est magnétisé de manière analogue, l'agencement et l'orientation des aimants individuels par rapport à la deuxième base (31) étant connus, au moins deux régulateurs de position (12) étant prévus qui comportent chacun une seule grandeur de régulation scalaire et une seule grandeur de réglage scalaire (57), la grandeur de régulation étant à chaque fois l'un des six degrés de liberté possibles par rapport à une position relative (50 ; 51) entre le premier et le deuxième module (20 ; 30), la grandeur de réglage (57) représentant une force ou un couple qui est associé à ce degré de liberté, les positions de consigne (80) des actionneurs (24) étant calculées à partir des grandeurs de réglage (57) par résolution d'un système d'équations non linéaires à l'aide de la méthode du gradient et/ou déterminées à l'aide de tables de valeurs, les actionneurs (24) étant réglés en conséquence.

2. Procédé selon la revendication 1,
les régulateurs de position (12) étant chacun conçus comme des régulateurs linéaires continus.

3. Procédé selon l'une des revendications précédentes,
six régulateurs de position (12) étant prévus.

4. Procédé selon l'une des revendications précédentes,
les actionneurs (24) étant réglables au moyen d'un courant électrique, chaque actionneur (24) étant associé à un régulateur de position (87) dont la grandeur de régulation est la position (80 ; 81) de l'actionneur (24) concerné, la grandeur de réglage étant au moins indirectement le courant électrique (83) concerné.

5. Procédé selon l'une des revendications précédentes,
un dispositif de détermination de position (13) étant prévu qui permet de déterminer, en particulier de mesurer, un vecteur de position relative réelle (51) du deuxième module (30) par rapport au premier module (20) .

6. Procédé selon l'une des revendications précédentes,
un paramètre d'erreur scalaire (60) étant calculé à partir des positions relatives réelles (51) et des positions relatives de consigne spécifiées (50) ou du vecteur de grandeur de réglage et du vecteur de grandeur de réglage de consigne dans le cadre de la résolution du système d'équations non linéaire, le paramètre d'erreur (60) étant optimisé dans le cadre de la résolution du système d'équations non linéaire.

7. Procédé selon la revendication 6,
l'optimisation du paramètre d'erreur (60) étant effectuée de manière itérative, les régulateurs de position (12) étant calculés de manière discrète dans le temps avec une impulsion d'horloge fixe, toutes les étapes d'itération de l'optimisation étant exécutées en une impulsion d'horloge.

8. Procédé selon la revendication 7,
les positions de consigne (54) des actionneurs de l'impulsion d'horloge immédiatement précédente étant utilisées comme valeurs initiales de l'optimisation itérative.

9. Procédé selon l'une des revendications précédentes,
une pluralité de premiers et de deuxièmes modules (20 ; 30) étant prévus, le procédé selon l'une des revendications précédentes étant mis en œuvre séparément pour chaque module (20 ; 30) qui est présent plusieurs fois.

10. Dispositif de déplacement (10) comprenant un premier et un deuxième module (20 ; 30), le premier module (20) comprenant une première base (21) et une pluralité de premiers agencements d'aimants permanents (22), les premiers agencements d'aimants permanents (22) étant reliés à la première base (21) par le biais d'un actionneur respectivement associé (24) de telle manière qu'ils puissent chacun être déplacés comme un tout dans au moins un degré de liberté au moyen de l'actionneur respectivement associé (24) par rapport à la première base (21), le deuxième module (30) comprenant une deuxième base (31) et un deuxième agencement d'aimants permanents (32), le deuxième agencement d'aimants permanents (32) étant disposé de manière fixe par rapport à la deuxième base (31), le deuxième agencement d'aimants permanents (32) comprenant une pluralité d'aimants individuels (33) ou un agencement d'aimants permanents monobloc qui est magnétisé de manière analogue, l'agencement et l'orientation des aimants individuels par rapport à la deuxième base (31) étant connus, au moins deux régulateurs de position (12) étant prévus qui comportent chacun une seule grandeur de régulation scalaire et une seule grandeur de réglage scalaire (57), la grandeur de régulation étant à chaque fois l'un des six degrés de liberté possibles par rapport à une position relative (50 ; 51) entre le premier et le deuxième module (20 ; 30), la grandeur de réglage (57) représentant une force ou un couple qui est associé à ce degré de liberté, les positions de consigne (80) des actionneurs (24) étant calculées à partir des grandeurs de réglage (57) par résolution d'un système d'équations non linéaires à l'aide de la méthode du gradient et/ou déterminées à l'aide de tables de valeurs, les actionneurs (24) étant réglés en conséquence.

11. Dispositif de déplacement selon la revendication 10,
le dispositif de déplacement étant conçu pour mettre en œuvre un procédé selon l'une des revendications 2 à 9.
